# EUROPÄISCHE PATENTSCHRIFT

(11) **EP 1 054 599 B1**
(45) Veröffentlichungstag und Bekanntmachung des Hinweises auf die Patenterteilung: **08.09.2004**
(21) Anmeldenummer: 99910203.1
(22) Anmeldetag: 06.02.1999
(51) Int. Cl.: A22C 13/00

(54) **WURSTHÜLLE MIT STÄRKE ODER STÄRKEDERIVATEN UND HERSTELLUNGSVERFAHREN**
SAUSAGE CASING WITH STARCH OR STARCH DERIVATIVES AND METHOD FOR PRODUCING THE SAME
BOYAU A SAUCISSE CONTENANT DE L'AMIDON ET DES DERIVES D'AMIDON ET SON PROCEDE DE FABRICATION

(30) Priorität: 13.02.1998 DE 19805925
(43) Veröffentlichungstag der Anmeldung: 29.11.2000
(73) Patentinhaber: Kalle Nalo GmbH & Co. KG, 65203 Wiesbaden (DE)
(72) Erfinder: HAMMER, Klaus-Dieter, D-55120 Mainz (DE); GROLIG, Gerhard, D-64546 Mörfelden-Walldorf (DE); AHLERS, Michael, D-55122 Mainz (DE)
(74) Vertreter: Zounek, Nikolai, Dipl.-Ing.
(86) Internationale Anmeldenummer: PCT/EP1999/000801
(87) Internationale Veröffentlichungsnummer: WO 1999/040797

(56) Entgegenhaltungen:
- EP-A- 0 709 030
- EP-A- 0 820 698
- WO-A-92/19680
- CH-A- 303 515
- CH-A- 313 774
- DE-A- 19 515 477
- US-A- 3 329 509
- US-A- 4 784 863

## Beschreibung

Die Erfindung betrifft Wursthüllen aus Blends thermoplastischer Stärke oder Stärkederivate mit biologisch abbaubaren, hydrophilen, geschmeidigmachenden Polymeren sowie geeigneten anderen Zusatzstoffen und gegebenenfalls Vemetzungsmitteln.

Die meisten Wursthülien bestehen aus Naturdarm, aber auch aus faserverstärkter regenerierter Cellulose, Kollagen oder synthetischen Polymeren. Cellulose und Kollagen sind zwar natürlichen Ursprungs, die Herstellung der Wursthüllen erfolgt jedoch in aufwendigen und umweltbelastenden Verfahren. Hüllen aus anderem Material, beispielsweise aus eiweiß- oder acrylatbeschichtetem Gewebe, haben dagegen nur eine geringe Bedeutung.

Von den bekannten Hüllen decken nur die aus Cellulosehydrat das gesamte Anwendungsspektrum ab. Kollagenhüllen haben für manche Anwendungen eine zu hohe Durchlässigkeit für Wasserdampf oder Sauerstoff. Die Hüllen aus synthetischen Polymeren sind zur Herstellung von Dauerwurst ungeeignet. Sie lassen sich zwar preiswert und einfach herstellen, beispielsweise durch Extrudieren, sind jedoch im Gegensatz zu den Cellulosehydrat- oder Kollagenhüllen nicht biologisch abbaubar.

Die in der EP-A 0 709 030 beschriebene, durch Extrusion von thermoplastischer Stärke hergestellte Wursthülle ist zwar biologisch abbaubar, weist aber noch immer Defizite auf. Sie ist insbesondere nicht ausreichend kochbeständig und neigt zum Verspröden nach Wasserbehandlung oder durch Weichmacherverlust.

Es bestand daher nach wie vor die Aufgabe, eine Nahrungsmittelhülle zu entwickeln, die sich aus natürlichen - möglichst nachwachsenden - Rohstoffen mit einfachen und umweltschonenden Verfahren - möglichst nach einem Extrusionsverfahren - herstellen läßt und dabei gleichzeitig biologisch abbaubar oder mindestens kompostierbar ist. Die Hülle soll ausreichend permeabel und für praktisch alle Wurstarten, unter anderem also für die Herstellung von Koch- und Brühwürsten wie auch von Rohwürsten, verwendbar sein.

Gelöst wird die Aufgabe durch eine Mischung (Blend) aus thermoplastischer Stärke oder einem thermoplastischen Stärkederivat und einem oder mehreren synthetischen Polymeren. Gegenstand der vorliegenden Anmeldung ist somit eine nahtlose, schlauchförmige Nahrungsmittelhülle, die in einem Flächenverhältnis von 1:2 bis 1:10 blasverformt ist, hergestellt aus einem thermoplastischen Gemisch, das dadurch gekennzeichnet ist, daß es a) thermoplastische Stärke und/oder ein thermoplastisches Stärkederivat und b) mindestens ein anderes, durch Polykondensation oder Polyaddition erhältliches Polymer umfaßt, das aus der Gruppe bestehend aus einem Homo- oder Copolymer mit Hydroxycarbonsäure-Einheiten, einem Polyesterurethan, einem Polyetherurethan, einem Polyesterether-urethan, einem Polyvinylacetat und einem Polyalkylencarbonat ausgewählt ist, wobei das Polyalkylencarbonat der Formel -[CHR¹ -CHR² - O-CO-O-]ₙ entspricht, in der R¹ und R² unabhängig voneinander für ein Wasserstoffatom oder einen (C₁ - C₄)Alkylrest stehen und n eine ganze Zahl von 10 bis 5.000 ist, und das Gewichtsverhältnis a):b) im Bereich von 90:10 bis 10:90 liegt.

Das thermoplastische Stärkederivat ist vorzugsweise ein Stärkeester, wie er in der DE-A 195 15 477 ausführlich beschrieben ist. Die Säurekomponente in dem Ester ist allgemein eine (C₂-C₁₀)Alkansäure, die vorzugsweise nicht oder nur wenig verzweigt ist. Ein besonders bevorzugtes und kostengünstiges Stärkealkanoat ist Stärkeacetat, insbesondere solches mit einem Substitutionsgrad von weniger als 3, speziell von 1,5 bis 2,4. Anders als die Stärke selbst sind Stärkeester, wie das Stärkeacetat, bereits als solche thermoplastisch und müssen nicht erst plastifiziert werden. Stärkeester mit einer längeren Alkylkette, beispielsweise Stärkehexanoate, -octanoate oder -decanoate, bewirken eine Veränderung der Geschmeidigkeit und Zähigkeit wie auch der Permeation der Nahrungsmittelhüllen. Durch Kombinieren verschiedener Stärkeester lassen sich Hüllen mit ganz speziellen Eigenschaften herstellen. Auch thermoplastische Stärkederivate, die kationische quarternäre Seitengruppen mit hydrophoben (C₂-C₁₈)Alkylgruppen, vorzugsweise (C₂-C₁₂)Alkyfgruppen, aufweisen, sind geeignet.

Es hat sich gezeigt, daß Nahrungsmittelhüllen, die nur aus thermoplastischer Stärke und/oder thermoplastischen Stärkederivaten bestehen, noch nicht das gewünschte Maß an Dehnbarkeit, Festigkeit, Zähigkeit, Geschmeidigkeit, vor allem aber an Stabilität gegenüber heißem oder kochendem Wasser aufweisen. Die Eigenschaften der Hülle ließen sich auch dann nicht wesentlich verbessern, wenn der thermoplastischen Stärke oder dem thermoplastischen Stärkederivat noch verschiedene niedermolekulare Stoffe, wie Gleitmittel, Weichmacher und Füllstoffe, zugesetzt wurden. Überraschenderweise wurde gefunden, daß eine wesentliche Verbesserung erst dann eintritt, wenn die thermoplastische Stärke bzw. das Stärkederivat mit anderen, durch Polykondensation oder Polyaddition erhältlichen, für Lebensmittelverpackungen unbedenklichen Polymeren abgemischt ist.

Bevorzugte Homopolymere mit Hydroxycarbonsäure-Einheiten sind Polylactid, Poly(3-hydroxy-propionsäure), Poly(3-hydroxy-buttersäure), Poly(4-hydroxy-buttersäure) oder Polycaprolacton. Von den Polyalkylencarbonaten der Formel -[CHR¹-CHR²-O-CO-O-]ₙ, in der R¹ und R² unabhängig voneinander für ein Wasserstoffatom oder einen (C₁-C₄)-Alkylrest stehen und n eine ganze Zahl von 10 bis 5.000 bedeutet, sind Polyethylencarbonate, d.h. solche mit R¹ = R² = H, und Polypropylencarbonate sowie Gemische davon besonders geeignet. Die Polyalkylencarbonate sind beispielsweise in der WO 96/35746 beschrieben. Ein bevorzugtes Polymer, das durch Polyaddition erhältlich ist, stellt Polyvinylacetat dar. Die Polykondensations- oder Polyadditionsprodukte lassen sich nach bekannten Verfahren synthetisch herstellen. Sie sind üblicherweise nicht oder nur sehr gering vernetzt. Ihr mittleres Molekulargewicht M_{w} beträgt allgemein 20.000 bis 2.000.000, bevorzugt 100.000 bis 1.000.000. Es wird angenommen, daß die Polykondensate eine Art von Matrix bilden, in der sich die thermoplastische und damit destrukturierte Stärke bzw. das Stärkederivat gleichmäßig verteilt.

Das Gewichtsverhältnis der Komponenten a):b) beträgt bevorzugt 20:80 bis 80:20, besonders bevorzugt 40:60 bis 60:40.

Neben den Komponenten a) und b) kann das thermoplastische Gemisch noch weitere nieder- oder hochmolekulare Bestandteile enthalten, die insbesondere als Weichmacher oder Gleitmittel dienen oder die Verträglichkeit der Komponenten miteinander verbessern. Durch die weiteren Bestandteile kann die Homogenität oder Fließfähigkeit des extrudierbaren thermoplastischen Gemisches gegebenenfalls noch weiter verbessert werden. Als Weichmacher eignen sich besonders Glycerin, Diglycerin, Sorbit, Polyethylenglykol (PEG), Citronensäuretriethylester, Acetyl-citronensäuretriethylester, Glycerintriacetat, Phthalsäureester (speziell Dimethylphthalat, Diethylphthalat und Dibutylphthalat) sowie Sorbit-mono- und diester. Der Anteil an Weichmacher(n) beträgt bis zu 30 Gew.-%, bevorzugt bis zu 15 Gew.-%, jeweils bezogen auf das Gesamtgewicht des thermoplastischen Gemisches. Gleitmittel, die die Homogenität des thermoplastischen Gemisches verbessern, sind insbesondere pflanzliche Fette oder Öle, synthetische Triglyceride, Lecithine, ethoxylierte Fettalkohole oder Wachse. Der Anteil der Gleitmittel beträgt bis zu 12 Gew.-%, bevorzugt 2 bis 6 Gew.-%, besonders bevorzugt 3 bis 6 Gew.-%, jeweils bezogen auf das Gesamtgewicht des Gemisches.

Die erfindungsgemäße Hülle kann schließlich noch mit Fasern verstärkt sein. Allgemein sind die Fasern relativ kurz (durchschnittlich etwa 0,1 bis 3 mm, bevorzugt 0,2 bis 1,5 mm). Damit die Hülle biologisch abbaubar und somit kompostierbar bleibt, sind Fasern aus Baumwoll-Linters, Holzzellstoff, aus regenerierter Cellulose ("Regeneratfasern"), aus Hanf, Flachs, Sisal oder Jute besonders geeignet. Der Anteil an Fasern kann bis zu 25 Gew.-% betragen.

Vorzugsweise liegt der Faseranteil bei 2 bis 15, insbesondere bei 5 bis 15 Gew.-%, jeweils bezogen auf das Gesamtwicht des Gemisches. Die Fasern werden in dem thermoplastischen Gemisch bzw. der daraus hergestellten extrudierbaren Schmelze gleichmäßig verteilt.

Die Hülle kann entweder anstelle der Fasern oder zusätzlich noch Füllstoffe enthalten. Als Füllstoffe bieten sich beispielsweise Calciumcarbonat, Talkum, Kaolin oder Anhydrit (= Calciumsulfat) an. Der Anteil an Füllstoffen kann bis zu 12 Gew.-% betragen, bevorzugt liegt er jedoch bei 2 bis 8 Gew.-%, besonders bevorzugt bei 4 bis 8 Gew.-%, jeweils bezogen auf das Gesamtgewicht des thermoplastischen Gemisches.

Für Hüllen mit einer besonders hohen Stabilität gegenüber heißem oder kochendem Wasser hat es sich als günstig erwiesen, dem thermoplastischen Gemisch noch Vernetzungsmittel hinzuzufügen. Geeignete Vemetzungsmittel sind beispielsweise Dicarbonsäuren, Di- oder Triisocyanate (besonders Hexamethylendiisocyanat), Dialdehyde (besonders Glyoxal), Diepoxide, Diimine oder Silane bzw. Siloxane mit Vinylgruppe(n), beispielsweise Vinyl-trimethyl-silan. Der Vernetzer wird vorzugsweise erst dann zugesetzt, wenn die übrigen Komponenten des Gemisches bereits aufgeschmolzen sind. Der Anteil an Vemetzer(n) beträgt bis zu 20 Gew.-%, vorzugsweise 0,5 bis 10 Gew.-%, besonders bevorzugt 1 bis 5 Gew.-%. jeweils bezogen auf das Gesamtgewicht des thermoplastischen Gemisches.

Die Herstellung von thermoplastisch verarbeitbarer Stärke ist bekannt und in den WO 90/05161 und 90/10019 beschrieben. Bei der Plastifizierung wird die Helixstruktur der nativen Stärke aufgehoben. Die Stärke liegt danach in amorphem Zustand vor. Die Plastifizierung erfolgt allgemein durch Erhitzen und Zuführen mechanischer Energie, beispielsweise durch längere thermische Behandlung in einem Kneter oder einem Ein- bzw. Zweischneckenextruder. Damit die Stärke unterhalb ihrer Zersetzungstemperatur schmilzt, sind Zusätze notwendig, wie Wasser, 1,3-Butandiol, Glycerin, Diglycerin, N,N-Dimethylharnstoff, Sorbit oder Citrat. Beim Plastifizieren mit Wasser werden etwa 20 bis 25 Gew.-% Wasser, vorzugsweise etwa 17 Gew,-% Wasser hinzugefügt, jeweils bezogen auf das Gewicht der nativen Stärke. Dabei wird eine Temperatur von etwa 100 bis 130 °C eingehalten. Beim Plastifizieren mit Glycerin haben sich ein Anteil von 0,5 bis 20 Gew.-%, vorzugsweise 8 bis 16 Gew.-%, wiederum jeweils bezogen auf das Gewicht der nativen Stärke, und eine Temperatur von 150 bis 170 °C als günstig erwiesen. Durch diese Behandlung wird der Anteil der kristallinen Stärke auf 5 Gew.-% oder noch darunter gesenkt.

Das thermoplastische Gemisch läßt sich in üblichen Apparaturen, beispielsweise in einem Zweischneckenkneter, aus den genannten Komponenten herstellen. Zur Bildung einer homogenen, thermoplastischen Schmelze aus dem Gemisch hat sich eine Temperatur von 90 bis 200 °C, bevorzugt von 120 bis 180 °C, als günstig erwiesen. Die Schmelze kann extrudiert, nach dem Abkühlen zerkleinert und als Granulat oder in ähnlicher Form zwischengelagert, ebenso gut auch direkt zu einer Nahrungsmittelhülle verarbeitet werden. Der aus der beschriebenen Schmelze hergestellte Schlauch wird dann im Blasformverfahren mit Luft aufgeblasen und dabei längs und quer verstreckt in einem Flächenverhältnis von 1:2 bis 1:10, bevorzugt 1:3 bis 1:5. Erst durch die Verstreckung erhalten die Schläuche die optimale Festigkeit, Dehnung, Kaliberhaltung und Schrumpf. Wie stark ausgeprägt jede dieser Eigenschaften ist, hängt primär von der Zusammensetzung des thermoplastischen Gemisches ab. So lassen sich die Nahrungsmittelhüllen durch gezielte Auswahl der Komponenten des thermoplastischen Gemisches, der Verstreckungsbedingungen und der Art der Nachbehandlung den unterschiedlichsten Anforderungen anpassen. Gegebenenfalls können die blasverformten Hüllen auch noch teilweise thermofixiert werden.

In einem weiteren Verfahrensschritt können die schlauchförmigen Hüllen innen und/oder außen präpariert werden, um sie für die verschiedenen Verwendungen als Wursthülle noch besser geeignet zu machen. Dafür lassen sich die meisten der flüssigen Präparationen, die auch für die Veredelung von Cellulosehydrathüllen üblich sind, in entsprechend angepaßter Konzentration einsetzen. So ist es besonders günstig, die innere Oberfläche einer für Dauerwurst vorgesehenen Hülle mit Eiweiß (bevorzugt Casein, Gelatine, Sojaprotein oder Weizenprotein) zu überziehen. Das Eiweiß wird dabei üblicherweise mit einem Aldehyd an die Oberfläche der Hülle gebunden. Durch den Einsatz von Harzen oder durch den Zusatz von Trennmitteln zum Eiweiß/Aldehyd kann die Schälbarkeit der Wursthülle eingestellt werden. Die Haftung der Hülle am Wurstbrät läßt sich mit bekannten Rezepturen bis zu einer starken Trennwirkung reduzieren (das ist beispielsweise erforderlich im Fall der Thüringer Blutwurst).

Geeignete Außenpräparationen sind ebenfalls bereits von Cellulosehüllen bekannt. Durch Behandeln der äußeren Oberfläche der Hülle mit einer solchen Präparation lassen sich insbesondere Schimmelresistenz, Oberflächenrauhigkeit und Bedruckbarkeit einstellen.

Die erfindungsgemäße Nahrungsmittelhülle kann in ihren Eigenschaften so weit variiert werden, daß sie einer Cellulose- oder auch einer Kunststoffhülle entspricht. Sie läßt sich nach einfachen und umweltfreundlichen Verfahren herstellen. Ihre guten Quell- und Schrumpfeigenschaften bewirken, daß sie jederzeit straff am Wurstbrät anliegt und daß sich auch beim langsamen Abtrocknen keine Falten bilden. Durch die Wahl der Komponenten kann die Permeabilität der Hülle für Wasser, Wasserdampf und Sauerstoff exakt eingestellt werden. Überraschenderweise ist die Hülle sogar durchlässig für Rauch, so daß sie auch für geräucherte Wurstsorten (beispielsweise Salami) gut geeignet ist. Die zur Herstellung der Hülle eingesetzte Stärke gehört darüber hinaus zu den besonders günstigen nachwachsenden Rohstoffen.

Die erfindungsgemäße Hülle kann schließlich auch noch mit einem - bevorzugt weitmaschigen - Netz umgeben werden, das dem fertigen Produkt ein besonders ansprechendes Aussehen verleiht. Es besteht aus einem zur Umhüllung von Würsten bekannten Schlauchnetz, das dem Umfang des Trägerschlauches angepaßt ist. Die Stärke soll mindestens .... mm betragen, damit.sich das Netz deutlich abhebt. Verwendet werden die unterschiedlichsten Maschenformen: dreieckig, sechseckig, quadratisch, rautenförmig, rund oder oval. Die Maschen selbst werden aus einzelnen oder miteinander verschlungenen Fäden gebildet und bestehen gewöhnlich aus Textilfäden, bevorzugt aus einem Material, das dem des Trägerschlauches ähnelt. Im Gegensatz zu dem aus der DE-A 39 07 951 bekannten Netz ist kein Kleber mehr notwendig, da sich die erfindungsgemäße Hülle der Netzstruktur anpaßt und so die gewünschte Haftung gewährleistet.

In den folgenden Beispielen sind Prozente als Gewichtsprozente zu verstehen, soweit nicht anders angegeben.

### Beispiel 1:

### a) Herstellung thermoplastischer Stärke

100 kg Kartoffelstärke wurden unter vermindertem Druck auf einen Wassergehalt von weniger als 0,3 % im Vakuum getrocknet und mit 50 kg Glycerin (99 %ig) in einem Kneter bei 160 bis 190 °C geschmolzen und gut durchmischt. Zur Aufhebung der Helixstruktur der Stärke wurde die Schmelze für etwa 2 h bei 170 °C gehalten. Sie wurde dann extrudiert und granuliert. Beim anschließenden Lagern des Granulats blieb die Stärke im amorphen und damit thermoplastischen Zustand.

### b) Herstellung einer unverstärkten, nahtlosen Nahrungsmittelhülle:

75 kg des unter a) beschriebenen Granulats (50 kg Stärke + 25 kg Glycerin) wurden mit 50 kg Polycaprolacton, 3 kg Sonnenblumenöl und 3 kg Hexamethylendiisocyanat gemischt. Die gleichmäßig miteinander vermischten Komponenten wurden in einem Extruder bei 150 °C geschmolzen. Anschließend wurde die Schmelze durch eine Ringdüse extrudiert. Der Durchmesser der Ringdüse war so gewählt, daß nach dem Blasverformen im Flächenverhältnis 1:10 ein Schlauch mit einem Durchmesser von 60 mm (= Kaliber 60) und einer Wanddicke von 80 µm erhalten wurde.

Die Schläuche sind beständig in Wasser, quellen jedoch darin und schrumpfen wieder beim Trocknen. Sie können in Form von einseitig abgebundenen Abschnitten oder in aufgestockter Form als sogenannte "Raupen" auf die Füllvorrichtung aufgesetzt werden. Sie sind insbesondere als Hüllen für Dauerwurst, (d.h. für eine Rohwurst mit besonders hohem Reifegrad) geeignet.

Im gewässerten Zustand wurde ein Platzdruck von 25 bis 35 kilo-Pascal (kPa) erreicht. Die statische Dehnung bei 15 kPa innendruck lag bei 68 bis 76 mm. Die Hüllen wurden mit Salamibrät gefüllt. Die Haftung am Brät war gering (Schälbarkeit nach 2 Wochen: "1" auf einer Werteskala von 1 bis 6, wobei "1" für "sehr leicht schälbar" und "6" für "übermäßig starke Haftung, Hülle kann nicht zerstörungsfrei abgezogen werden" steht).

Zur Erhöhung der Bräthaftung wurde daher eine Eiweiß-(Casein)/Glyoxal-Innenpräparation aufgetragen, wie sie bei Cellulosehydratschläuchen üblich ist.

### Beispiel 2:

Es wurde ein Blend hergestellt aus 50 kg Stärkeacetat mit einem Substitutionsgrad von 2,2 und einer Molmasse von 580 g/mol, die mit 50 kg Polyethylencarbonat mit einem Molekulargewicht M_{w} von 500.000 vermischt und mit 15 kg Citronensäuretriethylester versetzt wurden. Diese Mischung wurde mit 8 kg thermoplastischer Stärke, 5 kg 1,2;5,6-Diepoxy-hexan (Hexamethylendiepoxid) und 5 kg ethoxyliertem Octadecanol (Stearylalkohol), durchschnittlich 12 Ethylenoxid-Einheiten, versetzt.

Dieses Gemisch wurde in einem Zweischneckenextruder bei 150 bis 170 °C geschmolzen, gut durchmischt und anschließend durch eine Ringdüse extrudiert, deren Abmessungen so gewählt waren, daß nach Blasverformung im Flächenverhältnis 1:8 ein Schlauch von Kaliber 70 mit einer Wanddicke von 90 µm erhalten wurde.

Der so hergestellte Schluuch war brühbeständig; er quoll in Wasser und schrumpfte wieder beim Trocknen.

Im gewässerten Zustand wurde ein Platzdruck von 38 bis 42 kPa erreicht. Die statische Dehnung bei 15 kPa Innendruck lag bei 76 bis 80 mm.

Einseitig abgebundene oder geraffte Abschnitte waren zur Herstellung von Dauer- und Brühwurst geeignet. Die Schälbarkeit war bei beiden Brätsorten gut (Bewertung: 2).

### Beispiel 3 (Herstellung einer faserverstärkten Hülle):

Ein Blend aus 50 kg Stärkeacetat, 15 kg Citronensäuretriethylester und 50 kg Polyethylencarbonat wurde mit 10 kg Flachsfasern einer Länge von 0,2 bis 1,5 mm gleichmäßig in der Schmelze vermischt. Bei 160 bis 180 °C wurde die Schmelze durch eine Ringdüse extrudiert und blasverformt (Flächenstreckverhältnis 1:6), so daß ein Schlauch von Kaliber 60 erhalten wurde. Die gewässerten Schläuche erreichten einen Platzdruck von 60 bis 65 kPa und eine statische Dehnung von 65 bis 70 mm bei 21 kPa Innendruck.

Die Hüllen waren für Brüh- und Dauerwurst einsetzbar. Sie erreichten ein Füllkaliber von 66 bis 68 mm und ließen sich gut abschälen.

### Beispiel 4:

Ein Polymerblend wie im Beispiel 1 beschrieben wurde in der Schmelze mit 12 % Baumwoll-Linters gleichmäßig vermischt, extrudiert und blasverformt durch eine Ringdüse, so daß bei einer Längs- und Querverstreckung im Flächenverhältnis von 1:10 ein Schlauch von Kaliber 50 erhalten wurde.

Im gewässerten Zustand wurde ein Platzdruck von 60 bis 68 kPa und eine statische Dehnung von 56 bis 62 mm bei 21 kPa Innendruck gemessen.

Das Füllkaliber lag in Fall von Brüh- und Dauerwurst bei 57 bis 62 mm. Die Schälbarkeit war gut.

## Patentansprüche

1. Nahtlose, schlauchförmige Nahrungsmittelhülle, die in einem Flächenverhältnis von 1:2 bis 1:10 blasverformt ist, hergestellt aus einem thermoplastischen Gemisch, das **dadurch gekennzeichnet ist, daß** es a) thermoplastische Stärke und/oder ein thermoplastisches Stärkederivat und b) mindestens ein anderes, durch Polykondensation oder Polyaddition erhältliches Polymer umfaßt, das aus der Gruppe bestehend aus einem Homo- oder Copolymer mit Hydroxycarbonsäure-Einheiten, einem Polyesterurethan, einem Polyetherurethan, einem Polyesterether-urethan, einem Polyvinylacetat und einem Polyalkylencarbonat ausgewählt ist, wobei das Polyalkylencarbonat der Formel -[CHR¹ -CHR² - O-CO-O-]ₙ entspricht, in der R¹ und R² unabhängig voneinander für ein Wasserstoffatom oder einen (C₁ - C₄)Alkylrest stehen und n eine ganze Zahl von 10 bis 5.000 ist, und das Gewichtsverhältnis a):b) im Bereich von 90:10 bis 10:90 liegt.

2. Nahrungsmittelhülle gemäß Anspruch 1, **dadurch gekennzeichnet, daß** das thermoplastische Stärkederivat ein Stärkeester, bevorzugt ein Stärkealkanoat, besonders bevorzugt Stärkeacetat, ist.

3. Nahrungsmittelhülle gemäß Anspruch 1, **dadurch gekennzeichnet, daß** das Homopolymer mit Hydroxycarbonsäure-Einheiten ein Polylactid, Poly(3-hydroxy-propionsäure), Poly(3-hydroxy-buttersäure), Poly(4-hydroxy-buttersäure) oder Polycaprolacton ist.

4. Nahrungsmittelhülle gemäß einem oder mehreren der Ansprüche Anspruch 1 bis 3, **dadurch gekennzeichnet, daß** das Gewichtsverhältnis a):b) im Bereich von 20:80 bis 80:20, bevorzugt im Bereich von 40:60 bis 60:40, liegt.

5. Nahrungsmittelhülle gemäß einem oder mehreren der Ansprüche Anspruch 1 bis 4, **dadurch gekennzeichnet, daß** das thermoplastische Gemisch mindestens einen Weichmacher, vorzugsweise Glycerin, Diglycerin, Sorbit, Polyethylenglykol, Citronensäuretriethylester, Acetyl-citronensäuretriethylester, Glycerintriacetat, einen Phthalsäureester oder Sorbit-mono- oder -diester. enthält, wobei der Anteil an Weichmacher(n) bis zu 30 Gew.-%, bevorzugt bis zu 15 Gew.-%, jeweils bezogen auf das Gesamtgewicht des thermoplastischen Gemisches, beträgt.

6. Nahrungsmittelhülle gemäß einem oder mehreren der Ansprüche 1 bis 5, **dadurch gekennzeichnet, daß** das thermoplastische Gemisch mindestens ein Gleitmittel, bevorzugt ein pflanzliches Fett oder ein pflanzliches Öl, ein synthetisches Triglycerid, Lecithin, einen ethoxylierten Fettalkohol oder ein Wachs, enthält, wobei der Anteil an Gleitmittel(n) bis zu 12 Gew.-%, bevorzugt 2 bis 6 Gew.-%, besonders bevorzugt 3 bis 6 Gew.-%, jeweils bezogen auf das Gesamtgewicht des thermoplastischen Gemisches, beträgt.

7. Nahrungsmittelhülle gemäß einem oder mehreren der Ansprüche 1 bis 6, **dadurch gekennzeichnet, daß** das thermoplastische Gemisch mit Fasem, bevorzugt Fasern aus Baumwoll-Linters, Holzzellstoff, aus regenerierter Cellulose, aus Hanf, Flachs, Sisal oder Jute, vermischt ist, wobei der Anteil an Fasern bis zu 25 Gew.-%, bevorzugt 2 bis 15, besonders bevorzugt 5 bis 15 Gew.-%, jeweils bezogen auf das Gesamtwicht des Gemisches, beträgt.

8. Nahrungsmittelhülle gemäß einem oder mehreren der Ansprüche 1 bis 7, **dadurch gekennzeichnet, daß** das thermoplastische Gemisch Füllstoffe, bevorzugt Calciumcarbonat, Talkum, Kaolin oder Anhydrit, enthält, wobei der Anteil an Füllstoffen bis zu 12 Gew.-%, bevorzugt 2 bis 8 Gew.-%, besonders bevorzugt 4 bis 8 Gew.-%, jeweils bezogen auf das Gesamtgewicht des Gemisches, beträgt.

9. Nahrungsmittelhülle gemäß einem oder mehreren der Ansprüche 1 bis 8, **dadurch gekennzeichnet, daß** das thermoplastische Gemisch mindestens ein Vernetzungsmittel, bevorzugt eine Dicarbonsäure, ein Di- oder Triisocyanat, ein Dialdehyd, ein Diepoxid, ein Diimin oder ein Silan bzw. Siloxan mit Vinylgruppe(n), enthält, wobei der Anteil an Vernetzer(n) bis zu 20 Gew.-%, bevorzugt 0,5 bis 10 Gew.-%, besonders bevorzugt 1 bis 5 Gew.-%, jeweils bezogen auf das Gesamtgewicht des Gemisches, beträgt.

10. Nahrungsmittelhülle gemäß einem oder mehreren der Ansprüche 1 bis 9, **dadurch gekennzeichnet, daß** sie mit einer Innen- und/oder Außenpräparation versehen ist.

11. Verfahren zur Herstellung der Nahrungsmittelhülle gemäß einem oder mehreren der Ansprüche 1 bis 9, **dadurch gekennzeichnet, daß** das thermoplastische Gemisch durch eine Ringdüse extrudiert und in einem Flächenverhältnis von 1:2 bis 1:10 blasverformt wird.

12. Verwendung der Nahrungsmittelhülle gemäß einem oder mehreren der Ansprüche 1 bis 10 als künstliche Wursthülle.

## Claims

1. A seamless, tubular food casing which is blown in an area ratio of from 1:2 to 1:10 produced from a thermoplastic mixture which comprises
a) thermoplastic starch and/or a thermoplastic starch derivative and b) at least one other polymer obtainable by polycondensation or polyaddition containing a a homopolymer or copolymer with hydroxycarboxylic acid units, a polyesterurethane, a polyetherurethane, a polyesteretherurethane, a polyvinyl acetate or a polyalkylene carbonate of the formula -[CHR¹-CHR²-O-CO-O-]ₙ, where R¹ and R² independently of one another are a hydrogen atom or a (C₁-C₄) alkyl radical and n is an integer from 10 to 5000 and the weight ratio of a):b) being in the range from 90:10 to 10:90.

2. The food casing as claimed in claim 1, wherein the thermoplastic starch derivative is a starch ester, preferably a starch alkanoate, particularly preferably starch acetate.

3. The food casing as claimed in claim 1, wherein the homopolymer containing hydroxycarboxylic acid units is a polylactide, a poly(3-hydroxypropionic acid), a poly(3-hydroxybutyric acid), a poly(4-hydroxybutyric acid) or polycaprolactone.

4. The food casing as claimed in one or more of claims 1 to 3, wherein the weight ratio a):b) is in the range from 20:80 to 80:20, preferably in the range from 40:60 to 60:40.

5. The food casing as claimed in one or more of claims 1 to 4, wherein the thermoplastic mixture comprises at least one plasticizer, preferably glycerol, diglycerol, sorbitol, polyethylene glycol, citric acid triethyl ester, acetylcitric acid triethyl ester, glycerol triacetate, a phthalic ester or sorbitol monoester or sorbitol diester, the proportion of plasticizer(s) being up to 30% by weight, preferably up to 15% by weight, in each case based on the total weight of the thermoplastic mixture.

6. The food casing as claimed in one or more of claims 1 to 5, wherein the thermoplastic mixture comprises at least one lubricant, preferably a vegetable fat or a vegetable oil, a synthetic triglyceride, lecithin, an ethoxylated fatty alcohol or a wax, the proportion of lubricant(s) being up to 12% by weight, preferably from 2 to 6% by weight, particularly preferably from 3 to 6% by weight, in each case based on the total weight of the thermoplastic mixture.

7. The food casing as claimed in one or more of claims 1 to 6, wherein the thermoplastic mixture is mixed with fibers, preferably fibers from cotton linters, wood pulp, from regenerated cellulose, from hemp, flax, sisal or jute, the proportion of fibers being up to 25% by weight, preferably from 2 to 15, particularly preferably from 5 to 15, % by weight, in each case based on the total weight of the mixture.

8. The food casing as claimed in one or more of claims 1 to 7, wherein the thermoplastic mixture comprises fillers, preferably calcium carbonate, talc, kaolin or anhydrite, the proportion of fillers being up to 12% by weight, preferably from 2 to 8% by weight, particularly preferably from 4 to 8% by weight, in each case based on the total weight of the mixture.

9. The food casing as claimed in one or more of claims 1 to 8, wherein the thermoplastic mixture comprises at least one crosslinker, preferably a dicarboxylic acid, a diisocyanate or triisocyanate, a dialdehyde, a diepoxide, a diimine or a silane or siloxane containing vinyl group(s), the proportion of crosslinker(s) being up to 20% by weight, preferably from 0.5 to 10% by weight, particularly preferably from 1 to 5% by weight, in each case based on the total weight of the mixture.

10. The food casing as claimed in one or more of claims 1 to 9, wherein it is provided with an internal preparation and/or external preparation.

11. A process for producing the food casing as claimed in one or more of claims 1 to 9, which comprises extruding the thermoplastic mixture through an annular die and blowing it in an area ratio of from 1.2 to 1:10.

12. The use of the food casing as claimed in one or more of claims 1 to 10 as synthetic sausage casing.

## Revendications

1. Enveloppe tubulaire sans couture pour aliments, formée par soufflage selon un ratio surfacique de 1 :2 à 1 :10, préparée à partir d'un mélange thermoplastique **caractérisé en ce qu'**il comprend a) de l'amidon thermoplastique et/ou un dérivé d'amidon thermoplastique, et b) au moins un autre polymère susceptible d'être obtenu par polycondensation ou polyaddition choisi dans le groupe constitué d'un homo- ou co-polymère comportant des unités hydroxycarboxyliques, un polyester uréthane, un polyéther uréthane, un polyester ether-uréthane, un acétate de polyvinyle et un carbonate de polyalkylène, le carbonate de polyalkylène ayant la formule -[CHR¹-CHR²-O-CO-O-]ₙ dans laquelle R¹ et R² représentent indépendamment l'un de l'autre, un atome d'hydrogène ou un radical alkyl en (C₁-C₄), et où n est un nombre entier de 10 à 5000, le ratio pondéral a :b étant compris dans la plage de 90 :10 à 10 :90.

2. Enveloppe pour aliments selon la revendication 1, **caractérisée en ce que** le dérivé d'amidon thermoplastique est un ester d'amidon, de préférence un alcanoate d'amidon, en particulier un acétate d'amidon.

3. Enveloppe pour aliment selon la revendication 1, **caractérisée en ce que** le homopolymère comportant des unités hydroxycarboxyliques est un polylactide, poly(3-hydroxy-acide propanoïque), poly(3-hydroxy-acide butanoïque)-poly(4-hydroxy-acide butanoïque) ou polycapolactone.

4. Enveloppe pour aliments selon l'une quelconque des revendications 1 à 3, **caractérisée en ce que** le ratio pondéral a :b est compris dans la plage de 20 :80 à 80 : 20, de préférence dans la plage de 40 :60 à 60 :40.

5. Enveloppe pour aliments selon l'une quelconque des revendications 1 à 4, **caractérisée en ce que** le mélange thermoplastique comprend au moins un plastifiant, de préférence un glycérol, di-glycérol, sorbitol, polyéthylène glycol, triéthylester d'acide citrique, triéthylester d'acétyle citrique, triacétate de glycérol, un ester d'acide phtalique ou un mono ou diester de sorbitol, la teneur en plastifiant (s) allant jusqu'à 30 % en poids, de préférence jusqu'à 15 % en poids, respectivement par rapport au poids total du mélange thermoplastique.

6. Enveloppe pour aliments selon l'une quelconque des revendications 1 à 5, **caractérisée en ce que** le mélange thermoplastique comprend au moins un agent antifriction, de préférence un lipide végétal ou une huile végétale, un triglycéride synthétique, lécithine, un alcool gras éthoxylé ou une cire, la teneur en agent antifriction étant de jusqu'à 12 % en poids, de préférence 2 à 6 % en poids, en particulier 3 à 6 % en poids, respectivement par rapport au poids total du mélange thermoplastique.

7. Enveloppe pour aliments selon l'une quelconque des revendications 1 à 6, **caractérisée en ce que** le mélange thermoplastique est mélangé avec des fibres, de préférence des fibres de coton égrené, de cellulose de bois, de cellulose régénérée, de chanvre, de lin, de sisal ou de jute, la teneur en fibre étant de jusqu'à 25 % en poids, de préférence de 2 à 15, en particulier de 5 à 15 % en poids, respectivement par rapport au poids total du mélange.

8. Enveloppe pour aliments selon l'une quelconque des revendications 1 à 7, **caractérisée en ce que** le mélange thermoplastique contient des charge de préférence du carbonate de calcium, talc, kaolin ou anhydrite, la teneur en charge étant jusqu'à 12 % en poids, de préférence de 2 à 8 % en poids, en particulier 4 à 8 % en poids, respectivement par rapport au poids total du mélange.

9. Enveloppe pour aliments selon l'une quelconque des revendications 1 à 8, **caractérisée en ce que** le mélange thermoplastique contient au moins un agent de réticulation, de préférence un acide dicarboxylique, un di- ou tri-isocyanate, un di-aldhéyde, un di-époxide, une di-imine ou un silane ou siloxane comportant un ou plusieurs groupe vinylique, la teneur en agent de réticulation étant de jusqu'à 20 % en poids, de préférence 0,5 à 10 % en poids, en particulier 1 à 5 % en poids, respectivement par rapport au poids total du mélange.

10. Enveloppe pour aliments selon l'une quelconque des revendications 1 à 9, **caractérisée en ce qu'**elle est munie d'une préparation intérieure et/ou extérieure.

11. Procédé de préparation d'une enveloppe pour aliment selon l'une quelconque des revendications 1 à 9, **caractérisée en ce que** le mélange thermoplastique est extrudé à travers une buse annulaire et formé par soufflage selon un ratio surfacique de 1 :2 jusqu'à 1 : 10.

12. Utilisation de l'enveloppe pour aliments selon l'une quelconque des revendications 1 à 10 à titre de boyau de saucisse artificiel.
